# FASCICULE DE BREVET EUROPEEN

(11) **EP 3 363 178 B1**
(45) Date de publication et mention de la délivrance du brevet: **03.03.2021**
(21) Numéro de dépôt: 16794377.8
(22) Date de dépôt: 13.10.2016
(51) Int. Cl.: H04W 12/08, H04W 12/00

(54) **DISPOSITIF ÉLECTRONIQUE COMPRENANT UN MODULE SÉCURISÉ SUPPORTANT UN MODE DE GESTION LOCALE DE CONFIGURATION D'UN PROFIL SOUSCRIPTEUR**
ELEKTRONISCHE VORRICHTUNG MIT EINEM SICHERHEITSMODUL ZUR UNTERSTÜTZUNG EINES MODUS FÜR DAS LOKALE MANAGEMENT DER KONFIGURATION EINES ABONNENTENPROFILS
ELECTRONIC DEVICE COMPRISING A SECURE MODULE SUPPORTING A MODE FOR THE LOCAL MANAGEMENT OF THE CONFIGURATION OF A SUBSCRIBER PROFILE

(30) Priorité: 15.10.2015 FR 1559820
(43) Date de publication de la demande: 22.08.2018
(73) Titulaire: IDEMIA France, 92400 Courbevoie (FR)
(72) Inventeur: WOZNIAK, Tomasz, 92700 Colombes (FR); MICHEL, Alexis, 92700 Colombes (FR)
(74) Mandataire: Jacobacci Coralis Harle
(86) Numéro de dépôt international: PCT/FR2016/052652
(87) Numéro de publication internationale: WO 2017/064430

(56) Documents cités:
- US-A1- 2008 009 317
- US-A1- 2011 306 318
- US-A1- 2014 031 012

## Description

Le domaine de l'invention concerne un dispositif électronique comprenant un module sécurisé, de type carte à puce par exemple, destiné à héberger au moins un profil de souscripteur à un réseau de communication mobile.

Le module sécurisé d'un dispositif électronique est communément désigné par l'acronyme UICC pour « Universal Integrated Circuit Card » en anglais, par eUICC pour « Embedded Universal Integrated Circuit Card » ou eSE pour « Embedded Secure Element ». Ces modules sécurisés sont de type carte à puce amovible ou soudée dans le dispositif électronique de l'utilisateur.

Dans une architecture dite M2M, pour « Machine to Machine » en anglais, un profil de provisionnement est chargé lors de la fabrication du module sécurisé ou du dispositif électronique puis le ou les profils souscripteurs sont provisionnés par un serveur distant au moyen d'un réseau de communication sécurisé mettant en œuvre des opérations de chiffrement et déchiffrement des données.

Par exemple, le profil d'un souscripteur permettant l'utilisation d'un service de réseau de communication mobile peut être provisionné et configuré à distance. Les spécifications techniques de l'association GSMA nommées « Remote Provisioning Architecture for Embedded UICC » version 3.0 du 30 juin 2015 (SGP-02-V3-0) visent à encadrer le développement de ces solutions. Un autre exemple d'un profil d'un souscripteur provisionné à distance, est le document brevet US 2014/0031012 A1. Z

De plus, on connaît par exemple le document brevet EP1483930B1 décrivant une solution permettant la mise à jour d'un module sécurisé. Les actions de provisionnement et configuration sont initiées par un serveur distant.

Or, Il est également recherché de proposer des dispositifs électroniques autorisant l'utilisateur ou une application résidant au sein du dispositif électronique ou au sein du module sécurisé à initier de façon locale le provisionnement d'un profil souscripteur et de configurer localement ce profil. Les fonctions dites de gestion du profil ou « Profile Management » en anglais sont alors également transmises au moyen d'une interface du dispositif électronique communiquant avec le module sécurisé. L'interface a pour fonction de transmettre des requêtes locales de configuration, initiées par exemple par l'utilisateur ou bien par une application pouvant être située, par exemple, dans le dispositif électronique ou bien dans le module sécurisé, à partir d'un applicatif logiciel de gestion du profil fonctionnant dans l'environnement logiciel du dispositif électronique, à un gestionnaire local des requêtes locales de configuration du module sécurisé.

Par gestion locale ou mode de gestion local du profil on entend les fonctions de configuration d'un profil initiées ou issues du dispositif électronique (via l'intermédiaire de l'interface homme-machine ou d'une application) embarquant le module sécurisé ou initiées ou issues du module sécurisé lui-même (via l'intermédiaire d'une application) à la différence d'une architecture dans laquelle les fonctions de gestion du profil sont issues d'un serveur distant.

Un objectif de l'invention est d'assurer la sécurité des actions de configuration locale du profil. Un autre objectif de l'invention est d'assurer la cohabitation entre un mode de gestion distante d'un profil et un mode de gestion locale.

Plus précisément, l'invention concerne un dispositif électronique comprenant un module sécurisé destiné à héberger au moins un profil souscripteur à un réseau de communication mobile et une première interface pour au moins la transmission de requêtes locales de configuration de profil vers le module sécurisé. Selon l'invention, le dispositif comprend un gestionnaire local pour au moins la réception de requêtes locales de configuration de profil issues de la première interface et également un agent d'activation comprenant un moyen de détection d'un mode de gestion locale du profil pour autoriser et/ou interdire au gestionnaire local de traiter les requêtes locales de configuration en fonction du résultat de la détection.

Dans une variante de réalisation, les requêtes locales sont des requêtes d'activation d'un profil souscripteur, les requêtes de désactivation d'un profil souscripteur, et les requêtes d'effacement d'un profil souscripteur.

Dans une variante de réalisation, le moyen de détection comprend un moyen pour vérifier que, lors d'un provisionnement du profil, ce provisionnement du profil est issu de la première interface pour déterminer le résultat de la détection.

Dans une variante de réalisation, le module sécurisé comprend également une deuxième interface communiquant avec un serveur distant pour au moins la réception de requêtes distantes de configuration de profil et le moyen de détection comprend un moyen pour déterminer au moins un protocole de transport radiofréquence sécurisé qui a été opéré par la deuxième interface lors du provisionnement du profil pour déterminer le résultat de la détection.

Dans une variante de réalisation, le protocole de transport radiofréquence sécurisé est de type SCP80 ou SCP81.

Dans une variante de réalisation, le moyen de détection comprend également un moyen pour vérifier que la deuxième interface a reçu une instruction d'activation du mode de gestion locale du profil issue du serveur distant pour déterminer le résultat de la détection.

Dans une variante de réalisation, la première interface comprend un moyen pour notifier le serveur distant pour activer le mode de gestion locale du profil.

Dans une variante de réalisation, l'agent d'activation comprend un moyen pour autoriser et/ou interdire au gestionnaire local de traiter tout ou une partie des requêtes locales de configuration issues de la première interface. Par exemple, l'agent d'activation comprend un moyen pour autoriser au gestionnaire local de traiter les requêtes locales d'activation et de désactivation d'un profil souscripteur et pour interdire au gestionnaire local de traiter les requêtes locales d'effacement d'un profil souscripteur.

Il est également prévu selon l'invention, un procédé d'activation d'un mode de gestion locale de requêtes de configuration d'un profil souscripteur pour un dispositif électronique comprenant un module sécurisé destiné à héberger au moins un profil souscripteur. Selon l'invention, le procédé comprend une étape de détection d'un mode de gestion locale du profil par un moyen de détection d'un agent d'activation du module sécurisé, puis une étape d'autorisation ou d'interdiction à un gestionnaire local du module sécurisé de traiter des requêtes locales de configuration issues d'une première interface du dispositif électronique en fonction du résultat de la détection.

Selon une variante de réalisation, l'étape de détection comprend la vérification que, lors d'un provisionnement du profil, ce provisionnement du profil est issu de la première interface pour déterminer le résultat de la détection.

Selon une variante de réalisation, l'étape de détection comprend également la détermination d'au moins un protocole de transport radiofréquence sécurisé qui a été opéré par une deuxième interface du module sécurisé pour déterminer le résultat de la détection.

Selon une variante de réalisation, le protocole de transport radiofréquence sécurisé est de type SCP80 ou SCP81.

Selon une variante de réalisation, l'étape de détection comprend également la vérification de la réception par la deuxième interface d'une instruction d'activation du mode de gestion locale du profil issue d'un serveur distant pour déterminer le résultat de la détection.

Selon une variante de réalisation, le procédé comprend également une étape de notification par l'interface au serveur distant pour activer le mode de gestion locale du profil.

Selon une variante de réalisation, le procédé comprend également une étape d'autorisation ou d'interdiction au gestionnaire local de traiter tout ou une partie des requêtes locales de configuration issues de la première interface. Par exemple, l'agent d'activation autorise au gestionnaire local de traiter les requêtes locales d'activation et de désactivation d'un profil souscripteur et interdit au gestionnaire local de traiter les requêtes locales d'effacement d'un profil souscripteur.

Dans une variante de réalisation du procédé, les requêtes locales de configuration sont des requêtes d'activation du profil souscripteur, des requêtes de désactivation du profil souscripteur et des requêtes d'effacement du profil souscripteur.

Il est prévu selon l'invention, un produit programme ordinateur mémorisant un code exécutable par un dispositif électronique comprenant un module sécurisé destiné à héberger au moins un profil souscripteur à un réseau de communication mobile pour la mise en œuvre du procédé selon l'un quelconque des modes de réalisation précédents.

Grâce à l'invention, l'activation du mode de gestion locale de configuration d'un profil souscripteur est sécurisée. Le module sécurisé dispose de moyens de détection pour autoriser ou interdire le traitement de requêtes locales de configuration. De plus, l'invention permet à un opérateur de garder le contrôle sur le mode de gestion locale de configuration d'un profil, et en particulier en permettant l'autorisation ou l'interdiction de requêtes spécifiques choisies par l'opérateur. Par ailleurs, la détection du mode de gestion locale est intégrée dans les fonctionnalités du module sécurisé permettant ainsi d'assurer sa sécurité.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
la figure 1 représente un dispositif électronique d'un utilisateur comprenant un module sécurisé comprenant un gestionnaire local de requêtes locales de configuration ;
la figure 2A représente une première variante du procédé d'activation du gestionnaire local du module sécurisé selon l'invention en opérant une détection du mode de gestion locale lors d'un provisionnement distant d'un profil conventionnellement opéré. Dans cette situation le gestionnaire local n'est pas activé ;
la figure 2B représente une deuxième variante du procédé d'activation du gestionnaire local du module sécurisé selon l'invention en opérant une détection du mode de gestion locale lors d'un provisionnement d'un profil initié localement. Dans cette situation le gestionnaire local est activé ;
la figure 3 représente une troisième variante du procédé d'activation du gestionnaire local du module sécurisé selon l'invention, le mode de gestion locale étant déclenché par la détection d'une instruction d'activation issue du serveur distant ;
la figure 4 représente une quatrième variante du procédé d'activation du gestionnaire local du module sécurisé selon l'invention, le mode de gestion locale étant déclenché par la lecture du statut d'un paramètre de la table de service du profil.

L'invention concerne un dispositif électronique d'un utilisateur souscripteur à un service de réseau de communication mobile de type GSM « Global System for Mobile communications » en anglais, CDMA (« Code Division Multiple Access » en anglais), WIFI, ou plus généralement tout réseau de communication à distance de courte, moyenne et longue portée. Le dispositif électronique peut être un dispositif portable de type téléphone mobile, tablette, montre, ordinateur, voiture ou dispositif électronique fixe utilisant un réseau de téléphonie mobile pour ses fonctions, par exemple un contrôleur distant, un distributeur ou toute machine pouvant être supervisée à distance dans une architecture de type M2M.

A ces fins, le dispositif électronique comprend un module sécurisé destiné à héberger un ou plusieurs profils souscripteurs pour s'authentifier à un ou plusieurs réseaux de communication mobile. Le profil souscripteur est configuré à distance via la communication sécurisée offerte par le réseau de communication mobile.

Par ailleurs dans le cadre de l'invention, il est recherché de proposer un dispositif électronique dont le profil souscripteur peut être provisionné et configuré localement via une interface du dispositif électronique communiquant avec un gestionnaire local du module sécurisé. Il est nécessaire de sécuriser le gestionnaire local et d'assurer la coopération entre le gestionnaire local et le serveur distant opérant habituellement les actions de provisionnement et configuration. L'invention propose un dispositif électronique comprenant un module sécurisé apte à fonctionner selon un mode de gestion locale du profil.

Un mode de gestion locale fonctionne au moyen de fonctions pour configurer le profil souscripteur et de requêtes locales qui sont initiées par l'utilisateur du dispositif électronique, par exemple au moyen d'une application de configuration d'un profil embarquée opérable par l'utilisateur via une interface homme machine du dispositif électronique 1. Le mode de gestion locale permet à un utilisateur de configurer un profil souscripteur directement à partir de requêtes locales que l'utilisateur a initiées sur son dispositif électronique. A titre d'exemple non limitatif, les requêtes locales sont des requêtes d'activation d'un profil (« EnableProfile »), les requêtes de désactivation d'un profil (« DisableProfile ») et les requêtes d'effacement d'un profil (« DeleteProfile »).

Le mode de gestion distante d'un profil souscripteur diffère du fait qu'un serveur distant initie des requêtes distantes de configuration. Les requêtes distantes de configuration sont initiées par une fonction du serveur distant et transmises au module sécurisé via le réseau de communication de téléphonie mobile. Les requêtes de configuration distantes sont sécurisées par des méthodes de chiffrement et des protocoles de transport sécurisés radiofréquences. Par exemple, ces requêtes distantes correspondent aux requêtes listées au point 4.1 de la norme GSMA précitée décrivant les fonctions existantes entre un serveur distant et le module sécurisé pour la gestion d'un profil. A titre d'exemple non limitatif, les requêtes distantes d'un profil sont les requêtes de création d'un profil (« CreatelSDP »), les requêtes d'activation d'un profil (« EnableProfile »), de désactivation d'un profil (« DisableProfile »), les requêtes d'effacement d'un profil (« DeleteProfile »), les requêtes d'interrogation de statut d'un profil (« eUICCCapabilityAudit »), les requêtes d'authentification mutuelle pour l'échange d'un secret (« establishISDRKeySet »), les requêtes d'effacement de clé (« FinaliselSDRhandover »).

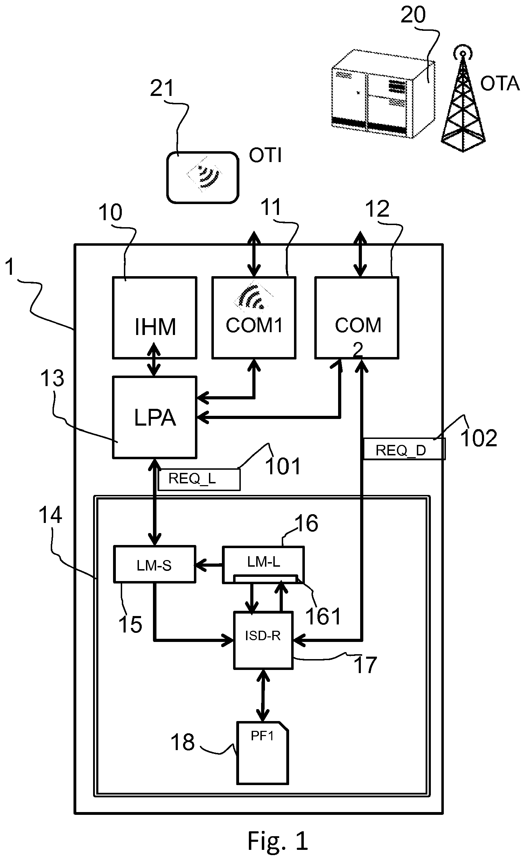

Plus précisément, la figure 1 représente le dispositif électronique 1 d'un utilisateur comprenant un module sécurisé 14 pouvant héberger un ou plusieurs profils de souscripteur 18. Le module sécurisé 14 est un circuit intégré de type carte SIM amovible « Subscriber Identification Module » en anglais, ou un circuit intégré soudé au dispositif électronique 1, communément appelé eSE. Le dispositif électronique 1 comprend également un moyen de communication 12 pour échanger des données au travers d'un réseau de communication radiofréquence, par exemple de type GSM ou CDMA. Le moyen de communication 12 permet des échanges de type voix, données, internet mobile ou SMS (« short message service » en anglais) par exemple.

Plus précisément, un profil souscripteur 18 comprend, entre autres, les paramètres de connexion et moyens cryptographiques pour s'authentifier et accéder à un réseau de téléphonie mobile, un système de fichiers, des groupes de clés cryptographiques (« keysets » en terminologie anglaise) et des applications d'accès au réseau (« NAA » en terminologie anglaise). En particulier, le profil souscripteur permet l'utilisation de clés cryptographiques privées et d'applications réseau mémorisées dans le module sécurisé 14 pour s'authentifier avec un serveur d'authentification du réseau de téléphonie et ainsi être autorisé à utiliser les ressources du réseau de télécommunication. De plus, les moyens cryptographiques comprennent des fonctions opérant des algorithmes d'authentification utilisés pour le processus d'authentification ainsi que des algorithmes de chiffrement et déchiffrement des données pour opérer les communications sécurisées au travers du réseau de téléphonie mobile.

Le dispositif électronique 1 comprend une première interface 13 pour au moins la transmission de requêtes locales 101 de configuration de profil vers le module sécurisé 14. Les requêtes locales 101 de configuration sont les requêtes/fonctions opérant les fonctions de gestion du profil 18, comme par exemple les fonctions d'activation, désactivation et d'effacement d'un profil. Ces requêtes locales sont générées par le dispositif électronique 1, par exemple par une demande de l'utilisateur via l'interface homme-machine 10 et l'interface de configuration 13.

On notera que les requêtes locales de configuration 101 d'un profil 18 peuvent opérer les fonctions équivalentes aux requêtes distantes dites de PROFILE MANAGEMENT de la spécification technique GSMA précitées, comme par exemple les requêtes distantes nommées EnableProfile, DisableProfile et DeleteProfile. A la différence de la spécification GSMA, les requêtes locales de configuration 101 sont générées par le dispositif électronique 1, et non par un serveur distant 20.

La première interface 13 est une application opérée par l'environnement logiciel du dispositif électronique 1 et, de préférence, a pour fonction également de provisionner un profil souscripteur 18 au module sécurisé 14 dans un mode de provisionnement initié localement. Dans ce mode de provisionnement initié localement, l'interface 13 comprend un moyen pour transmettre une requête de provisionnement de profil souscripteur à un serveur distant de provisionnement 20 via les moyens de communication 11 ou 12. L'interface 13 comprend également un moyen pour recevoir le script d'installation d'un profil souscripteur reçu via les moyens de communication 11 ou 12. Il peut être envisagé un accès à un réseau de communication 21 différent d'un réseau de téléphonie mobile par lequel le profil peut être provisionné dans le mode local. Le réseau de communication 21 est un réseau d'un fournisseur d'un accès internet (filaire ou fibre optique par exemple) via des communications de type WIFI, Ethernet ou fibre optique par exemple.

Dans le mode de gestion locale d'un profil souscripteur, on notera que les requêtes locales de configuration 101 lorsqu'elles sont reçues de l'extérieur via le moyen de communication 11 ou le moyen de communication 12 sont traitées par l'interface 13 (par exemple pour des opérations de déchiffrement et mémorisation temporaire) afin d'être exécutables par le module sécurisé 14.

Par ailleurs, dans le cadre de l'invention, le module sécurisé 14 comprend également un gestionnaire local 15 pour au moins la réception des requêtes locales 101 de configuration de profil issues de la première interface 13 et également un agent d'activation 16 comprenant un moyen de détection 161 d'un mode de gestion locale du profil pour autoriser et interdire au gestionnaire local 15 de traiter les requêtes locales 101 de configuration en fonction du résultat de la détection. Plus précisément, l'agent d'activation 16 autorise au gestionnaire local 15 de traiter les requêtes locales issues de la première interface 13 lorsque le résultat de la détection indique que le mode de gestion locale est détecté. Sinon, l'agent d'activation 16 interdit au gestionnaire local 15 de traiter les requêtes locales issues de la première interface 13 lorsque le résultat de la détection indique que le mode de gestion locale n'est pas détecté. On notera que le module sécurisé 14 est apte à recevoir les requêtes locales de configuration 101 et un profil souscripteur 18 dont le provisionnement est initié par l'utilisateur au moyen de l'interface 13.

Par ailleurs, le module sécurisé 14 comprend une deuxième interface 17 apte à communiquer avec le serveur distant 20 pour la réception d'un profil souscripteur 18 et de requêtes distantes 102 de configuration du profil 18. La deuxième interface 17 est un moyen de routage d'un profil souscripteur et des requêtes de configuration distantes générées par le serveur distant 20. L'interface 17 du module sécurisé 14 opère notamment des opérations de chiffrement-déchiffrement conformes aux protocoles de transport sécurisés dits « Secure Channel Protocol » en anglais, par exemple SCP03 ou SCP03t, SCP80 et SCP81. Une fois le flux de données déchiffré, il est traité par le module sécurisé 14 pour l'exécution du script l'installation du profil et des requêtes distantes de configuration. L'interface 17 du module sécurisé 14 reçoit un flux de données via un moyen de communication GSM ou CDMA 12 du dispositif électronique 1.

Par exemple, le moyen de chiffrement-déchiffrement de l'interface 17 du module sécurisé est conforme à la spécification technique SCP03 décrite dans le document « Global Platform Card Technology - Secure Channel Protocol 03 - Card Specification V2.2 Amendment D », version 1.1.1, à la spécification technique SCP03t décrite dans le document « Remote Provisioning Architecture for Embedded UICC Technical Spécification », version 3.0, à la spécification technique SCP80 notamment mise en œuvre dans le document ETSI TS 102 225 v12.0.0 « Secured packet structure for UICC based applications » et à la spécification technique SCP081 « Remote Application Management over http - Card Specification V2.2-Amendment B » - version 1.1.3.

Il est également envisageable que l'interface 13 du dispositif électronique 1 opère également des opérations de déchiffrement conformes aux protocoles de transport sécurisés SCP03, SCP80 ou SCP81 avant la transmission au gestionnaire locale 15 du module sécurisé 14.

On notera que l'interface 17 est couramment désignée par l'acronyme ISD-R (« Issuer Security Domain Root » en anglais) dans la norme GSMA précitée et est prévue pour coopérer avec une interface du serveur distant 20 en charge du chiffrement du flux de données (par exemple script d'installation d'un profil souscripteur, requêtes distantes 102 sous la forme de commande APDU (« Application Protocol Data Unit » en anglais)).

Par ailleurs, dans le cadre de l'invention, l'interface 17 est apte à recevoir du gestionnaire local 15 des requêtes locales 101 reçues via l'interface 13 du dispositif électronique 1, lorsque le gestionnaire local 15 est autorisé à transmettre ces requêtes locales. L'interface 17 traite ensuite les requêtes locales. Ainsi, par traitement des requêtes locales par le gestionnaire locale 15, on entend notamment que le gestionnaire local 15 est en charge de transmettre les requêtes locales 101 de configuration à la deuxième interface 17 en fonction du résultat de la détection du mode de gestion locale.

L'interface 17 du module sécurisé peut également recevoir un script d'installation d'un profil souscripteur dans le mode de provisionnement initié localement issu de l'interface 13 du dispositif électronique 1. Dans ce cas-ci, le script d'installation et les requêtes locales de configuration ont été traités et déchiffrées, entièrement ou partiellement, préalablement par l'interface 13.

On notera que les requêtes distantes 102 de configuration d'un profil peuvent opérer les fonctions dites de PROFILE MANAGEMENT de la spécification technique GSMA précitées, comme par exemple les requêtes distantes nommées EnableProfile, DisableProfile et DeleteProfile.

Dans une première variante, le moyen de détection 161 comprend un moyen pour vérifier si lors du provisionnement le profil est issu de la première interface 13 pour déterminer le résultat de la détection. De plus, le moyen de détection 161 comprend un moyen pour déterminer au moins un protocole de transport sécurisé radiofréquence qui a été opéré par la deuxième interface 17 lors du provisionnement du profil pour déterminer le résultat de la détection. Par exemple, le moyen de détection détermine si le protocole de transport sécurisé est de type SCP81, SCP80, ou tout protocole de transport sécurisé radiofréquence pour un réseau de télécommunication. Lorsque le résultat de la détection indique qu'un protocole de transport sécurisé radiofréquence est détecté, l'agent d'activation 16 interdit au gestionnaire local 15 de traiter les requêtes locales 101, c'est à dire qu'il interdit la transmission des requêtes locales 101 de configuration à la deuxième interface 17. Dans le cas contraire, le gestionnaire local 15 est autorisé, par l'agent d'activation 16, à transmettre les requêtes locales 101 de configuration à la deuxième interface 17.

Dans une deuxième variante, le moyen de détection 161 comprend également un moyen pour vérifier si une instruction d'activation du mode de gestion locale du profil issue du serveur distant 20 est reçue pour déterminer le résultat de la détection. Lorsque le résultat de la détection indique qu'une telle instruction est reçue, l'agent d'activation 16 autorise le gestionnaire local 15 à transmettre les requêtes locales 101 de configuration à la deuxième interface 17. Dans le cas contraire, le gestionnaire local 15 interdit la transmission des requêtes locales 101 de configuration à la deuxième interface 17. Le serveur distant 20 est nécessairement notifié de la compatibilité du dispositif électronique 1 et du module sécurisé 14 avec le mode de gestion locale de configuration. Pour ce faire, une première façon consiste en une notification envoyée au serveur de la part du dispositif pour lui faire part de l'information de support et de compatibilité du module de sécurité avec la gestion local de management. Par exemple, ce mode de détection intervient lorsque le module sécurisé est inséré la première fois dans le dispositif électronique 1 ou bien lorsque l'utilisateur désire activer via l'interface homme machine la gestion locale de management. Aussi une autre façon de procéder peut s'effectuer via une requête du serveur auprès du module de sécurité via le dispositif électronique pour l'interroger de ses capacités quant à la gestion du mode local de management. Suite à l'échange entre le serveur et le module sécurisé, s'il s'avère que la gestion locale de management est supportée, alors le serveur activera le mode de gestion locale de management en envoyant une commande d'activation au module sécurisé et plus particulièrement à l'interface 17. Par exemple, ce mode peut intervenir lorsque le serveur distant 20 s'authentifie pour la première fois avec le module sécurisé 14.

Le moyen de détection 161 est une fonction logicielle de l'agent d'activation 16 apte à recevoir une notification ou apte à opérer des échanges de types requêtes et réponses avec l'interface 17 pour détecter le mode de gestion locale selon la première variante ou la deuxième variante de détection.

Il est envisagé que le dispositif électronique 1 comprenne également un moyen pour notifier le serveur distant 20 pour activer le mode de gestion locale du profil, notamment lorsqu'il détecte que le module sécurisé comprend un gestionnaire local 15 ou qu'une information ou drapeau l'indique dans la table de service d'un profil.

On notera que la première et la deuxième variante de la détection du mode de gestion locale peuvent être toutes deux ou uniquement l'une des deux opérées par l'agent d'activation 16.

Il est prévu par ailleurs que l'agent d'activation 16 comprenne un moyen pour autoriser et interdire au gestionnaire local 15 de transmettre à la deuxième interface 17 tout ou une partie des requêtes locales de configuration reçues par la première interface 13. Par exemple, l'agent d'activation 16 est apte à d'une part autoriser au gestionnaire local 15 de traiter une requête locale d'activation et de désactivation d'un profil souscripteur 18 par le gestionnaire local 15 et, d'autre part interdire au gestionnaire local 15 de traiter une requête locale d'effacement du profil. En particulier, cette configuration peut être voulue par un opérateur de téléphonie mobile qui ne souhaite pas l'effacement du profil par l'utilisateur.

Bien entendu, l'homme du métier peut prévoir d'autres répartitions ou architectures logicielles des fonctions exécutées par l'agent d'activation 16, le gestionnaire local 15, la première interface 13 et la deuxième interface 17 entre le dispositif électronique 1 et le module sécurisé 14 sans sortir du cadre de l'invention. L'homme du métier peut prévoir d'autres répartitions ou architectures logicielles qui garantissent un niveau de sécurité suffisant pour la protection du profil souscripteur et du fonctionnement du mode de gestion locale.

On notera que le serveur distant 20 est une entité électronique distante opérée par un opérateur de téléphonie mobile propriétaire du ou des profils souscripteurs enregistrés dans le module sécurisé 14. Le serveur distant 20 comprend une fonction de préparation des données pour l'installation de profils souscripteur et pour l'exécution de requêtes de configuration par le module sécurisé. Selon la spécification technique GSMA précitées, la fonction de préparation des données est désignée par SM-DP, pour « Subscription Manager Data Préparation » en anglais. Le serveur distant 20 comprend également une fonction de routage des données vers l'interface 17 du module sécurisé qui opère le chiffrement des communications radiofréquences (par exemple SCP80 et SCP81) et des données transmises (par exemple SCP03 ou SCP03t). Selon la spécification technique GSMA précitées, la fonction de routage des données est désignée par SM-SR, pour « Subscription Manager Secure Routing en anglais ».

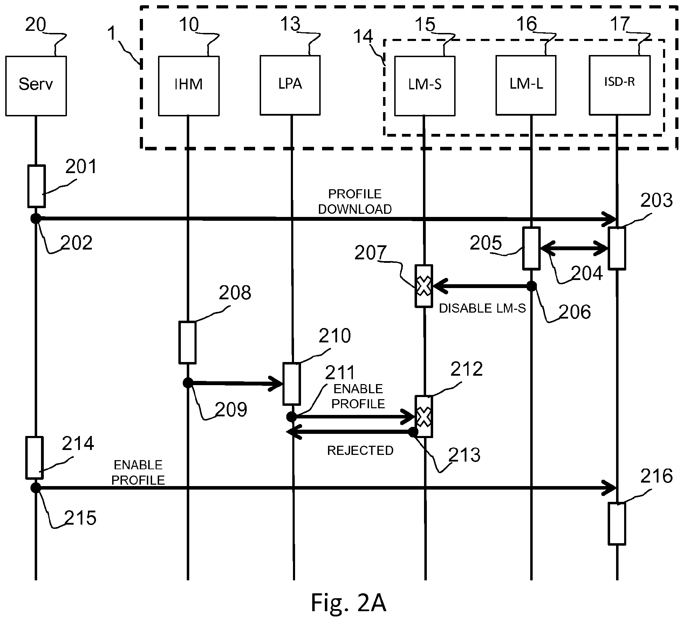

La figure 2A représente une première situation d'opération du procédé de désactivation du gestionnaire local 15. La première situation correspond à un provisionnement d'un profil issu d'un serveur distant 20 directement à l'interface 17 via le réseau radiofréquence de téléphonie mobile et pour lequel l'agent d'activation 16 interdit au gestionnaire local 15 de traiter les requêtes locales.

A une étape initiale 201, le serveur distant 20 prépare un script d'installation d'un profil souscripteur et assure le chiffrement du flux de données, par exemple un chiffrement de protocole de transport sécurisé radiofréquence conforme à la norme SCP80 ou SCP81.

A une étape 202, le script d'installation du profil est transmis à l'interface 17 du module sécurisé via le réseau de communication mobile chiffré conformément à un protocole de transport sécurisé radiofréquence. Puis, à une étape 203, le script d'installation du profil est reçu et traité par l'interface 17. Lors de cette étape, les opérations de déchiffrement conforme au protocole de transport sécurisé radiofréquence de type SCP80 ou SCP81 sont opérées.

En parallèle, le moyen de détection 161 de l'agent d'activation 16 exécute une étape de détection 205 du mode de gestion locale du profil provisionné. Dans ce mode de réalisation, le moyen de détection 161 sur requête ou réception d'une notification de l'interface 17 est informé que des opérations de déchiffrement conformes à un protocole de transport sécurisé radiofréquence sont exécutées. Des échanges d'informations 204 peuvent avoir lieu entre l'interface 17 et l'agent d'activation 16 pour réaliser la détection et déterminer le résultat de la détection. Dans ce cas-ci, le résultat de la détection indique que le mode de gestion locale n'est pas détecté.

On notera qu'à cette phase du processus, le profil du souscripteur installé n'est pas activé. Il est en état d'attente d'activation.

Dans cette situation, l'agent d'activation 16 détecte un provisionnement distant du profil car le résultat de la détection n'indique pas un mode de gestion local, et transmet à une étape 206, au gestionnaire local 15, une instruction d'interdiction de traiter les requêtes locales 101 de configuration. A une étape 207, le gestionnaire local 15 est commandé pour interdire le traitement des requêtes locales 101 de configuration, notamment leur transmission à l'interface 17.

On prend ensuite l'hypothèse qu'à une étape 208, l'utilisateur exécute une action via l'interface homme machine du dispositif électronique pour activer lui même le profil souscripteur. A une étape 209, l'instruction d'activation est transmise à l'interface 13 qui à une étape 210 élabore la requête d'activation locale. A une étape 211, la requête d'activation locale du profil est transmise au gestionnaire local 15. A l'étape 212, cette requête d'activation locale est rejetée, car le gestionnaire local 15 est interdit de transmettre les requêtes locales 101 de configuration à la deuxième interface 17. A une étape 213, une notification de rejet est transmise à l'interface 13 du dispositif électronique 1 qui de préférence informe alors l'utilisateur via l'interface homme machine.

On notera que par la suite, à une étape 214 le serveur distant 20 élabore une requête distante d'activation du profil, à une étape 215 la transmet à l'interface 17 du module sécurisé, puis à une étape 216 l'interface 17 traite la requête distante d'activation du profil. Il est envisageable que le serveur distant 20 ait été informé via un service internet de la volonté de l'utilisateur d'activer le profil suite au rejet de l'activation locale.

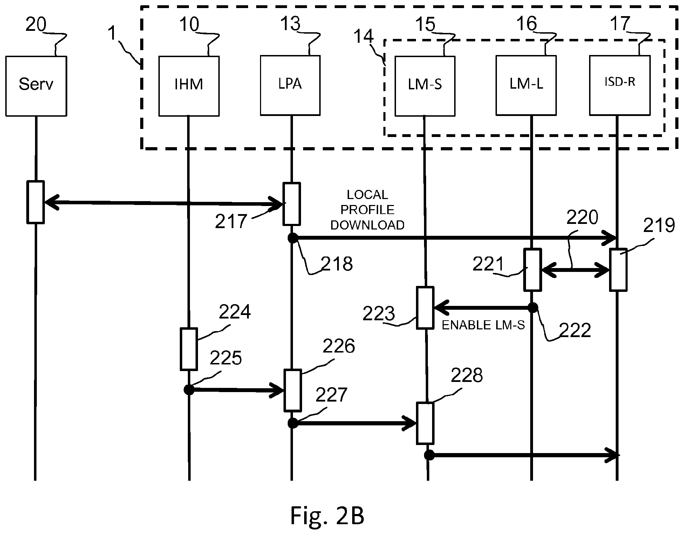

La figure 2B représente une deuxième situation d'opération du procédé d'activation du gestionnaire local 15 dans laquelle l'utilisateur initie le provisionnement d'un profil souscripteur via l'interface 13 du dispositif électronique 1, par exemple un profil d'un opérateur reçu via le moyen de communication 11 ou 12. La situation correspond à un premier mode de détection d'un mode de gestion locale par détection d'un provisionnement d'un profil issu de l'interface 13. L'agent d'activation 16 autorise au gestionnaire local 15 de traiter les requêtes locales de configuration 101.

A une étape 217, l'interface 13 initie auprès du serveur distant 20 via les moyens de communication 11 ou 12, une requête de provisionnement d'un profil souscripteur. Le serveur distant 20 transmet un script d'installation de profil, puis l'interface 13 reçoit le script d'installation via les moyens de communication 11 ou 12, et à une étape 218 l'interface 13 déclenche le provisionnement à destination de l'interface 17 du module sécurisé 14. Le provisionnement peut être chiffré lors de cette phase selon un protocole de chiffrement opéré pour un bus de communication filaire de données entre l'interface 13 du dispositif électronique 1 et l'interface 17 du module sécurisé 14. On notera que la requête de provisionnement est une commande locale de type « Download Profile » qui est dirigée directement à l'interface 17. A une étape 219, l'interface 17 traite le script d'installation du profil. On notera que la requête de provisionnement d'un profil n'est pas soumise au contrôle d'autorisation ou d'interdiction de traitement du gestionnaire local 15. Il est envisageable que l'interface 13 opère un déchiffrement du script d'installation à la réception s'il est reçu chiffré avant la transmission à l'interface 17 du module sécurisé.

En parallèle, le moyen de détection 161 de l'agent d'activation 16 exécute une étape de détection 221 d'un mode de gestion locale du profil provisionné. Dans ce mode de réalisation, Le moyen de détection 161 sur requête ou réception d'une notification de l'interface 17 est informé que le provisionnement du profil a été opéré via la première interface 13 pour déterminer le résultat de la détection. Plus précisément, l'absence d'opérations de déchiffrement (par exemple SCP80, SCP81) dans le cadre d'un protocole de transport sécurisé pour un réseau de communication radiofréquence, par exemple le réseau de communication de téléphonie mobile, est détectée par le moyen de détection 161 et détermine le résultat de la détection indiquant un mode de gestion locale. L'agent d'activation 16 est informé que le profil a été provisionné localement et détecte ainsi le mode de gestion locale du profil. Des échanges d'informations 220 ont lieu entre l'interface 17 et l'agent d'activation 16 pour réaliser la détection et déterminer le résultat de la détection.

Dans cette situation, l'agent d'activation 16 détecte un provisionnement local du profil 18, et envoie à une étape 222 un ordre d'autorisation de traitement des requêtes locales de configuration au gestionnaire local 15 du module sécurisé 14. A une étape 223, le gestionnaire local 15 est autorisé à transmettre les requêtes locales 101 de configuration à destination de la deuxième interface 17.

Ensuite, à une étape 224, l'utilisateur demande l'activation du profil via l'interface homme machine 10 du dispositif électronique 1. A une étape 225, cette demande est transmise à l'interface 13 qui élabore la requête locale d'activation du profil à une étape 226. A une étape 227, la requête locale d'activation est transmise au gestionnaire local 15 qui est retransmise à une étape 228 à l'interface 17 pour son exécution.

Il est envisageable que lors de l'étape 221, l'agent d'activation 16 détecte une instruction d'autorisation partielle des requêtes locales, par exemple une instruction d'autorisation des requêtes d'activation et désactivation du profil et une instruction d'interdiction des requêtes d'effacement d'un profil. A l'étape 222, l'ordre d'autorisation de traitement des requêtes locales de configuration au gestionnaire local 15 du module sécurisé 14 configure alors une autorisation partielle des requêtes locales, par exemple l'autorisation des requêtes d'activation/désactivation d'un profil et l'interdiction des requêtes d'effacement du profil.

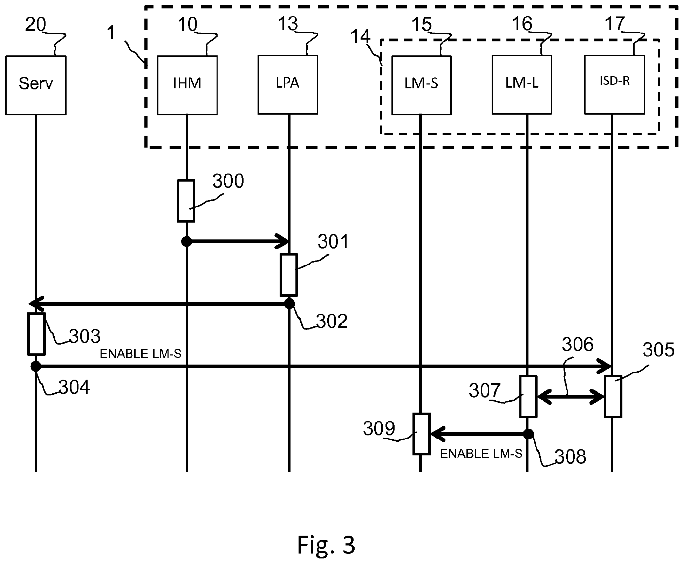

La figure 3 représente le deuxième mode de détection du mode de gestion locale du profil. Cette situation correspond par exemple à l'insertion du module sécurisé dans un nouveau dispositif électronique 1. Le module sécurisé 14 est compatible avec un mode de gestion locale, c'est à dire qu'il est apte à recevoir des requêtes locales de configuration du profil. A une étape 301 l'interface 13 élabore une notification à destination du serveur 20 de la présence de moyens d'opération d'un mode de gestion locale dans le dispositif électronique. A cette phase de la situation, l'agent d'activation 16 du module sécurisé 14 interdit au gestionnaire local 15 de traiter les requêtes locales 101. Dans une variante, à une étape préalable 300, l'utilisateur initie une requête d'activation du mode de gestion locale via l'interface homme machine 11 et l'interface 13.

Ensuite, à une étape 302, l'interface 13 transmet au serveur via le moyen de communication 11 ou le moyen de communication 12, une notification pour l'activation du mode de gestion locale. La notification est de préférence chiffrée par un algorithme de chiffrement en coopération avec le serveur distant. A une étape 303, le serveur distant 20 élabore une instruction d'activation du mode de gestion locale du profil puis opère à une étape 304 sa transmission à l'interface 17 via une communication sécurisée du réseau de communication mobile. L'ordre d'activation du mode de gestion locale est ainsi sécurisé.

L'interface 17 reçoit l'instruction d'activation du mode de gestion locale et exécute la commande à une étape 305 et transmet lors d'une étape 306 une instruction d'activation du mode de gestion locale à l'agent d'activation 16. Le procédé comprend ensuite une étape 307 par le moyen de détection 161 de vérification de la réception de l'instruction d'activation du mode de gestion locale de profil issue du serveur distant 20 pour déterminer le résultat de la détection. Le résultat de la détection indique que le mode de gestion locale est autorisé. A une étape 308, une instruction d'autorisation du mode de gestion locale est transmise au gestionnaire local 15. Les requêtes locales 101 de configuration sont alors autorisées à une étape 309.

Il est envisageable que le dispositif électronique opère le processus inverse correspondant à une désactivation du mode de gestion locale au moyen d'une instruction de désactivation issue du serveur distant 20. Dans cette situation, le moyen de détection 161 détermine le résultat de la détection qui indique une désactivation du mode de gestion locale. Ensuite, l'agent d'activation 16 interdit au gestionnaire local 15 de traiter les requêtes locales.

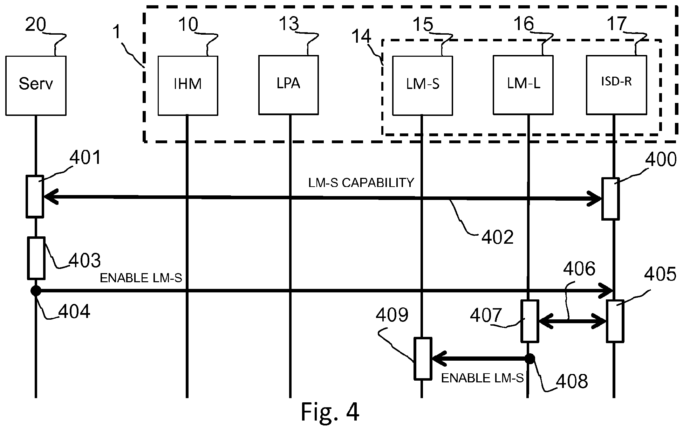

La figure 4 représente un troisième mode de réalisation pour l'activation du mode de gestion local. On prend l'hypothèse que le module sécurisé 14 se connecte avec le serveur distant 20 via une communication du réseau mobile. Par exemple, dans cette situation il s'agit de la première authentification du module sécurisé avec le serveur distant. Le module sécurisé 14 est déjà provisionné avec un profil souscripteur.

A une étape 400, l'interface 17 élabore une notification de compatibilité avec le mode de gestion locale, par exemple en informant du statut d'un paramètre de la table de service du profil. Le paramètre de la table de service est un drapeau ou une information, indiquant la compatibilité du profil avec un mode de gestion locale. A une étape 402, des échanges ont lieu entre l'interface 17 et le serveur distant 20 via la communication sécurisée du réseau de communication. A une étape 401, le serveur distant est informé de la compatibilité du module sécurisé avec le mode de gestion locale.

Dans une variante, lors de l'étape 401, le serveur distant 20 interroge l'interface 17 pour déterminer la comptabilité du module sécurisé 14 avec le mode de gestion locale. A l'étape 400, l'interface 17 procède à la lecture du paramètre de la table de service du profil.

A une étape 403, le serveur distant 20 élabore une instruction d'activation du mode de gestion locale du profil puis opère à une étape 404 sa transmission à l'interface 17 via une communication sécurisée du réseau de communication mobile. L'ordre d'activation du mode de gestion locale est ainsi sécurisé.

L'interface 17 reçoit l'instruction d'activation du mode de gestion locale et exécute la commande à une étape 405 et transmet lors d'une étape 406 une instruction d'activation du mode de gestion locale à l'agent d'activation 16. Le procédé comprend ensuite une étape 407 par le moyen de détection 161 de vérification de la réception de l'instruction d'activation du mode de gestion locale du profil issue du serveur distant 20 pour déterminer le résultat de la détection. Le résultat de la détection indique que le mode de gestion locale est autorisé. A une étape 408, une instruction d'autorisation du mode de gestion locale est transmise au gestionnaire local 15. Les requêtes locales 101 de configuration sont alors autorisées à une étape 409.

Bien entendu, il est prévu que toutes les variantes de réalisation du procédé d'activation du gestionnaire local 15 comprennent une étape de détection d'une instruction d'autorisation partielle des requêtes locales, par exemple une instruction d'autorisation des requêtes d'activation et désactivation du profil et une instruction d'interdiction des requêtes d'effacement d'un profil. L'ordre d'autorisation de traitement des requêtes locales de configuration au gestionnaire local 15 du module sécurisé 14 configure alors une autorisation partielle des requêtes locales, par exemple l'autorisation des requêtes d'activation/désactivation d'un profil et l'interdiction des requêtes d'effacement du profil.

L'invention assure la sécurisation de l'activation du mode de gestion locale par divers modes de détection opéré par l'agent d'activation 16 qui sont fonction de communications sécurisées, notamment par la détection d'un protocole de transport radiofréquence sécurisé entre le module sécurisé et un serveur distant ou la détection d'une commande d'activation issue du serveur distant. Le serveur distant garde ainsi le contrôle sur l'activation et désactivation du mode de gestion locale.

On notera que le dispositif électronique 1 et le module sécurisé 14 comprennent chacun un circuit intégré à micro-processeur et des mémoires programmables pour l'exécution des fonctions logicielles nécessaires à l'exécution du procédé d'activation du mode de gestion locale.

## Revendications

1. Dispositif électronique (1) comprenant un module sécurisé (14) destiné à héberger au moins un profil souscripteur (18) à un réseau de communication mobile et une première interface (13) pour au moins la transmission de requêtes locales (101) de configuration de profil vers le module sécurisé (14), **caractérisé en ce que** le module sécurisé (14) comprend un gestionnaire local (15) pour au moins la réception de requêtes locales (101) de configuration de profil issues de la première interface (13) et également un agent d'activation (16) comprenant un moyen de détection (161) d'un mode de gestion locale du profil pour autoriser et/ou interdire au gestionnaire local (15) de traiter les requêtes locales (101) de configuration en fonction du résultat de la détection.

2. Dispositif selon la revendication 1, **caractérisé en ce que** le moyen de détection (161) comprend un moyen pour vérifier que, lors d'un provisionnement du profil (18), ce provisionnement du profil (18) est issu de la première interface (13) pour déterminer le résultat de la détection.

3. Dispositif selon la revendication 1 ou 2, **caractérisé en ce que** le module sécurisé (14) comprend également une deuxième interface (17) communiquant avec un serveur distant (20) pour au moins la réception de requêtes distantes (102) de configuration de profil et **en ce que** le moyen de détection (161) comprend un moyen pour déterminer au moins un protocole de transport radiofréquence sécurisé qui a été opéré par la deuxième interface (17) lors du provisionnement du profil (18) pour déterminer le résultat de la détection.

4. Dispositif selon la revendication 3, **caractérisé en ce que** le protocole de transport radiofréquence sécurisé est de type SCP80 ou SCP81.

5. Dispositif selon l'une quelconque des revendications 3 à 4, **caractérisé en ce que** le moyen de détection (161) comprend également un moyen pour vérifier que la deuxième interface (17) a reçu une instruction d'activation du mode de gestion locale du profil issue du serveur distant (20) pour déterminer le résultat de la détection.

6. Dispositif selon l'une quelconque des revendications 3 à 5, **caractérisé en ce que** la première interface (13) comprend un moyen pour notifier le serveur distant (20) pour activer le mode de gestion locale du profil.

7. Dispositif selon l'une quelconque des revendications 1 à 6, **caractérisé en ce que** l'agent d'activation (16) comprend un moyen pour autoriser et/ou interdire au gestionnaire local (15) de traiter tout ou une partie des requêtes locales de configuration issues de la première interface (13).

8. Dispositif selon l'une quelconque des revendications 1 à 7, **caractérisé en ce que** les requêtes locales de configuration sont des requêtes d'activation du profil souscripteur, des requêtes de désactivation du profil souscripteur et des requêtes d'effacement du profil souscripteur.

9. Procédé d'activation d'un mode de gestion locale de requêtes de configuration d'un profil souscripteur (18) pour un dispositif électronique (1) comprenant un module sécurisé (14) destiné à héberger au moins un profil souscripteur (18), **caractérisé en ce qu'**il comprend une étape de détection (221 ;307 ;407) d'un mode de gestion locale du profil par un moyen de détection (161) d'un agent d'activation (16) du module sécurisé (14), puis une étape d'autorisation ou d'interdiction (222 ; 308 ; 408) à un gestionnaire local (15) du module sécurisé (14) de traiter des requêtes locales (101) de configuration issues d'une première interface (13) du dispositif électronique (1) en fonction du résultat de la détection.

10. Procédé selon la revendication 9, **caractérisé en ce que** l'étape de détection (221 ; 307; 407) comprend la vérification que, lors d'un provisionnement du profil (18), ce provisionnement du profil (18) est issu de la première interface (13) pour déterminer le résultat de la détection.

11. Procédé selon la revendication 9 ou 10, **caractérisé en ce que** l'étape de détection (221; 307; 407) comprend également la détermination d'au moins un protocole de transport radiofréquence sécurisé qui a été opéré par une deuxième interface (17) du module sécurisé (14) pour déterminer le résultat de la détection.

12. Procédé selon la revendication 11, **caractérisé en ce que** le protocole de transport radiofréquence sécurisé est de type SCP80 ou SCP81.

13. Procédé selon l'une quelconque des revendications 11 à 12, **caractérisé en ce que** l'étape de détection comprend également la vérification (307; 407) de la réception par la deuxième interface (17) d'une instruction d'activation du mode de gestion locale du profil issue d'un serveur distant (20) pour déterminer le résultat de la détection.

14. Procédé selon la revendication 13, **caractérisé en ce qu'**il comprend également une étape de notification par l'interface (13) au serveur distant (20) pour activer le mode de gestion locale du profil.

15. Procédé selon l'une quelconque des revendications 9 à 14, **caractérisé en ce qu'**il comprend également une étape d'autorisation ou d'interdiction au gestionnaire local (15) de traiter tout ou une partie des requêtes locales de configuration issues de la première interface (13).

16. Procédé selon l'une quelconque des revendications 9 à 15, **caractérisé en ce que** les requêtes locales de configuration sont des requêtes d'activation du profil souscripteur, des requêtes de désactivation du profil souscripteur et des requêtes d'effacement du profil souscripteur.

17. Produit programme ordinateur mémorisant un code exécutable par un dispositif électronique (1) comprenant un module sécurisé destiné à héberger au moins un profil souscripteur (18) à un réseau de communication mobile pour la mise en œuvre du procédé selon l'une quelconque des revendications 9 à 16, lorsque le programme est exécuté par le dispositif électronique (1).

## Patentansprüche

1. Elektronische Vorrichtung (1) mit einem Sicherheitsmodul (14), das dazu bestimmt ist, wenigstens ein Abonnentenprofil (18) für ein mobiles Kommunikationsnetz zu speichern, und einer ersten Schnittstelle (13) für wenigstens die Übermittlung lokaler Aufträge (101) zur Profileinstellung an das Sicherheitsmodul (14), **dadurch gekennzeichnet, daß** das Sicherheitsmodul (14) ein lokales Management (15) für wenigstens den Empfang lokaler Aufträge (101) zur Profileinstellung, die von der ersten Schnittstelle (13) kommen, und außerdem ein Aktivierungsmittel (16) mit einem Mittel (161) zum Erfassen eines Modus lokalen Managements des Profils aufweist, um dem lokalen Management (15) zu erlauben und/oder zu untersagen, die lokalen Aufträge (101) zur Profileinstellung in Abhängigkeit vom Ergebnis der Erfassung zu bearbeiten.

2. Vorrichtung gemäß Anspruch 1, **dadurch gekennzeichnet, daß** das Erfassungsmittel (161) ein Mittel zum Überprüfen, ob bei einer Bereitstellung des Profils (18) diese Bereitstellung des Profils (18) von der ersten Schnittstelle (13) kommt, aufweist, um das Ergebnis der Erfassung zu ermitteln.

3. Vorrichtung gemäß Anspruch 1 oder 2, **dadurch gekennzeichnet, daß** das Sicherheitsmodul (14) außerdem eine zweite Schnittstelle (17) aufweist, die mit einem Fernserver (20) für wenigstens den Empfang von Fernaufträgen (102) zur Profileinstellung kommuniziert, und daß das Erfassungsmittel (161) ein Mittel zum Ermitteln wenigstens eines Protokolls einer gesicherten Funkübermittlung, das durch die zweite Schnittstelle (17) bei der Bereitstellung des Profils (18) durchgeführt worden ist, aufweist, um das Ergebnis der Erfassung zu ermitteln.

4. Vorrichtung gemäß Anspruch 3, **dadurch gekennzeichnet, daß** das Protokoll einer gesicherten Funkübermittlung vom Typ SCP80 oder SCP81 ist.

5. Vorrichtung gemäß einem der Ansprüche 3 bis 4, **dadurch gekennzeichnet, daß** das Erfassungsmittel (161) außerdem ein Mittel zum Überprüfen, daß die zweite Schnittstelle (17) einen Befehl zum Aktivieren des lokalen Managementmodus des Profils vom Fernserver (20) erhalten hat, um das Ergebnis der Erfassung zu ermitteln.

6. Vorrichtung gemäß einem der Ansprüche 3 bis 5, **dadurch gekennzeichnet, daß** die erste Schnittstelle (13) ein Mittel zum Informieren des Fernservers (20) aufweist, um den lokalen Managementmodus des Profils zu aktivieren.

7. Vorrichtung gemäß einem der Ansprüche 1 bis 6, **dadurch gekennzeichnet, daß** das Aktivierungsmittel (16) ein Mittel aufweist, um dem lokalen Management (15) zu erlauben und/oder zu untersagen, die Gesamtheit oder einen Teil der von der ersten Schnittstelle (13) kommenden lokalen Aufträge zur Profileinstellung zu bearbeiten.

8. Vorrichtung gemäß einem der Ansprüche 1 bis 7, **dadurch gekennzeichnet, daß** die lokalen Aufträge zur Einstellung Aufträge zur Aktivierung des Abonnentenprofils, Aufträge zur Deaktivierung des Abonnentenprofils und Aufträge zum Löschen des Abonnentenprofils sind.

9. Verfahren zum Aktivieren eines Modus lokalen Managements von Aufträgen zur Einstellung eines Abonnentenprofils (18) für eine elektronische Vorrichtung (1) mit einem Sicherheitsmodul (14), das dazu bestimmt ist, wenigstens ein Abonnentenprofil (18) zu speichern, **dadurch gekennzeichnet, daß** es einen Schritt des Erfassens (221; 307; 407) eines Modus lokalen Managements des Profils durch ein Erfassungsmittel (161) eines Mittels (16) zum Aktivieren des Sicherheitsmoduls (14), dann einen Schritt, um dem lokalen Management (15) zu erlauben und/oder zu untersagen, die von einer ersten Schnittstelle (13) kommenden lokalen Aufträge zur Profileinstellung in Abhängigkeit vom Ergebnis der Erfassung zu bearbeiten, aufweist.

10. Verfahren gemäß Anspruch 9, **dadurch gekennzeichnet, daß** der Schritt des Erfassens (221; 307; 407) das Überprüfen, ob bei einer Bereitstellung des Profils (18) diese Bereitstellung des Profils (18) von der ersten Schnittstelle (13) kommt, aufweist, um das Ergebnis der Erfassung zu ermitteln.

11. Verfahren gemäß Anspruch 9 oder 10, **dadurch gekennzeichnet, daß** der Schritt des Erfassens (221; 307; 407) außerdem das Ermitteln wenigstens eines Protokolls einer gesicherten Funkübermittlung, das durch eine zweite Schnittstelle (17) des Sicherheitsmoduls (14) durchgeführt worden ist, aufweist, um das Ergebnis der Erfassung zu ermitteln.

12. Verfahren gemäß Anspruch 11, **dadurch gekennzeichnet, daß** das Protokoll einer gesicherten Funkübermittlung vom Typ SCP80 oder SCP81 ist.

13. Verfahren gemäß einem der Ansprüche 11 bis 12, **dadurch gekennzeichnet, daß** der Schritt des Erfassens außerdem die Überprüfung (307; 407), daß die zweite Schnittstelle (17) einen Befehl zum Aktivieren des lokalen Managementmodus des Profils vom entfernten Server erhalten hat, aufweist, um das Ergebnis der Erfassung zu ermitteln.

14. Verfahren gemäß Anspruch 13, **dadurch gekennzeichnet, daß** es außerdem einen Schritt des Informierens des Fernservers (20) durch die Schnittstelle (13) aufweist, um den lokalen Managementmodus des Profils zu aktivieren.

15. Verfahren gemäß einem der Ansprüche 9 bis 14, **dadurch gekennzeichnet, daß** es außerdem einen Schritt aufweist, dem lokalen Management (15) zu erlauben oder zu untersagen, die Gesamtheit oder einen Teil der von der ersten Schnittstelle (13) kommenden lokalen Aufträge zur Profileinstellung zu bearbeiten.

16. Verfahren gemäß einem der Ansprüche 9 bis 15, **dadurch gekennzeichnet, daß** die lokalen Aufträge zur Einstellung Aufträge zur Aktivierung des Abonnentenprofils, Aufträge zur Deaktivierung des Abonnentenprofils und Aufträge zum Löschen des Abonnentenprofils sind.

17. Computerprogrammprodukt, das einen durch eine elektronische Vorrichtung (1) mit einem Sicherheitsmodul, das dazu bestimmt ist, wenigstens ein Abonnentenprofil (18) für ein mobiles Kommunikationsnetz zu speichern, ausführbaren Code für die Durchführung des Verfahrens gemäß einem der Ansprüche 9 bis 16 speichert, wenn das Programm durch die elektronische Vorrichtung (1) durchgeführt wird.

## Claims

1. An electronic device (1) comprising a secure module (14) intended to host at least one mobile communication network subscriber profile (18) and a first interface (13) for at least the transmission of local profile configuration requests (101) to the secure module (14), **characterised in that** the secure module (14) comprises a local manager (15) for at least the reception of local profile configuration requests (101) coming from the first interface (13) and also an activation agent (16) comprising means (161) for detection of a local profile management mode to authorize and/or to prohibit the local manager (15) to process/from processing the local configuration requests (101) as a function of the result of the detection.

2. A device according to claim 1, **characterised in that** the detection means (161) comprise means for verifying, at the time of provisioning of the profile (18), that this provisioning of the profile (18) originates from the first interface (13) in order to determine the result of the detection.

3. A device according to claim 1 or 2, **characterised in that** the secure module (14) also comprises a second interface (17) communicating with a remote server (20) for at least the reception of remote profile configuration requests (102) and **in that** the detection means (161) comprise means for determining at least one secure radiofrequency transport protocol that has been executed by the second interface (17) at the time of provisioning of the profile (18) in order to determine the result of the detection.

4. A device according to claim 3, **characterised in that** the secure radiofrequency transport protocol is of the SCP80 or SCP81 type.

5. A device according to any of claims 3 to 4, **characterised in that** the detection means (161) also comprise means for verifying that the second interface (17) has received an instruction to activate the local profile management mode coming from the remote server (20) in order to determine the result of the detection.

6. A device according to any of claims 3 to 5, **characterised in that** the first interface (13) comprises means for notifying the remote server (20) to activate the local profile management mode.

7. A device according to any of claims 1 to 6, **characterised in that** the activation agent (16) comprises means for authorizing and/or prohibiting the local manager (15) to process/from processing some or all of the local configuration requests coming from the first interface (13).

8. A device according to any of claims 1 to 7, **characterised in that** the local configuration requests are requests for activation of the subscriber profile, requests for deactivation of the subscriber profile and requests for deletion of the subscriber profile.

9. A method of activation of a local management mode of requests for configuration of a subscriber profile (18) for an electronic device (1) comprising a secure module (14) adapted to host at least one subscriber profile (18), **characterised in that** it comprises a step (221; 307; 407) of detection of a local profile management mode by detection means (161) of an activation agent (16) of the secure module (14), followed by a step (222; 308; 408) of authorizing or prohibiting a local manager (15) of the secure module (14) to process/from processing local configuration requests (101) coming from a first interface (13) of the electronic device (1) as a function of the result of the detection.

10. A method according to claim 9, **characterised in that** the detection step (221; 307; 407) comprises the verification that, at the time of provisioning of the profile (18), this provisioning of the profile (18) originates from the first interface (13) in order to determine the result of the detection.

11. A method according to claim 9 or 10, **characterised in that** the detection step (221; 307; 407) also comprises the determination of at least one secure radiofrequency transport protocol that has been executed by a second interface (17) of the secure module (14) in order to determine the result of the detection.

12. A method according to claim 11, **characterised in that** the secure radiofrequency transport protocol is of the SCP80 or SCP81 type.

13. A method according to any of claims 11 to 12, **characterised in that** the detection step also comprises the verification (307; 407) of the reception by the second interface (17) of an instruction for activation of the local profile management mode coming from a remote server (20) in order to determine the result of the detection.

14. A method according to claim 13, **characterised in that** it also comprises a step of notification by the interface (13) to the remote server (20) to activate the local profile management mode.

15. A method according to any of claims 9 to 14, **characterised in that** it also comprises a step of authorizing or prohibiting the local manager (15) to process/from processing some or all of the local configuration requests coming from the first interface (13).

16. A method according to any of claims 9 to 15, **characterised in that** the local configuration requests are requests for activation of the subscriber profile, requests for deactivation of the subscriber profile and requests for deletion of the subscriber profile.

17. A computer program product storing code that can be executed by an electronic device (1) comprising a secure module intended to host at least one mobile communication network subscriber profile (18) so as to implement a method according to any of claims 9 to 16, when the program is executed by the electronic device (1).
